Europäisches Patentamt

European Patent Office

Office européen des brevets

(11) Veröffentlichungsnummer: **0 172 299**

**A1**

(12) ## EUROPÄISCHE PATENTANMELDUNG

(21) Anmeldenummer: 85100917.5

(22) Anmeldetag: 30.01.85

(51) Int. Cl.⁴: **B 23 Q 39/04**

(30) Priorität: 24.07.84 DE 3427245

(43) Veröffentlichungstag der Anmeldung:
26.02.86 Patentblatt 86/9

(84) Benannte Vertragsstaaten:
AT BE CH FR GB IT LI LU NL SE

(71) Anmelder: Maschinenfabrik Diedesheim GmbH
Steige 61
D-6950 Mosbach(DE)

(72) Erfinder: Frank, Hans-Eberhard, Dr.-Ing.
Theodor-Leutwein-Strasse 12
D-6935 Waldbrunn 1(DE)

(72) Erfinder: Petrizza, Norbert, Dr.-Ing.
Schulstrasse 3
D-7107 Bad Friedrichshall(DE)

(74) Vertreter: Beyer, Rudi
Gneisenaustrasse 1
D-4030 Ratingen 6 (Hösel)(DE)

(54) **Werkzeugmaschine.**

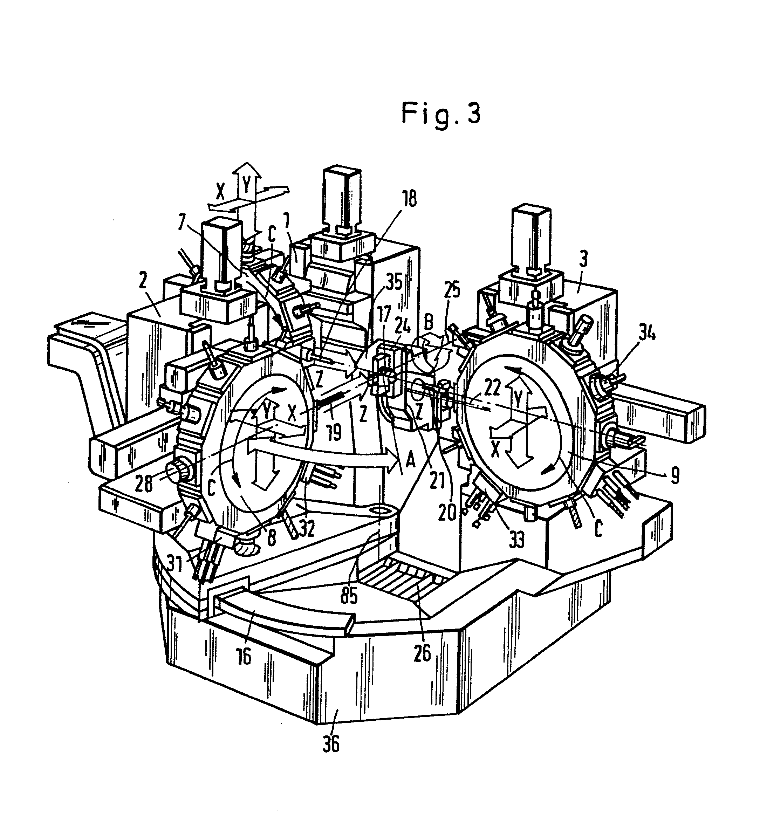

(57) Der Erfindung betrifft eine modular aufgebaute Werkzeugmaschine, bei der ein Werkstück (17) gleichzeitig von mindestens zwei, vorzugsweise aber von drei Seiten bearbeitet werden kann, wobei nur ein Werkstückträger (21) erforderlich ist. Es ergibt sich bei hoher Flexibilität der Maschine eine kompakte Bauform (Fig. 3).

Fig. 3

EP 0 172 299 A1

- 1 -

## Werkzeugmaschine

### Gattung

Die Erfindung betrifft eine Werkzeugmaschine mit taktweise in Bearbeitungsstellung bringbaren Werkzeugen, mit Werkzeugträger, Werkstückträger und mehreren Bewegungsachsen. Mindestens eine Bearbeitungsachse kann NC-gesteuert sein.

### Stand der Technik

Es sind als "Bearbeitungszentrum" bezeichnete Werkzeugmaschinen bekannt, die insgesamt drei Arbeitsachsen (X,Y,Z) aufweisen und eine Palettenklemmvorrichtung besitzen, wobei das Werkstück durch einen Palettenzubringer und eine Palettenschwenkvorrichtung in Bearbeitungsstellung bringbar ist. Die Investitionskosten sind zwar verhältnismäßig gering, jedoch ist zum gleichzeitigen Bearbeiten von Werkstücken von mehreren Seiten stets eine entsprechende Anzahl solcher Bearbeitungszentren erforderlich, so

- 2 -

daß sich die Investitionskosten entsprechend multiplizieren würden, ganz abgesehen von dem erforderlichen
Aufstellraum für solche Bearbeitungszentren.

Bekannt sind auch sogenannte "Mehrstationen-Schalttischmaschinen", bei denen eine besondere Ladestation und
drei Bearbeitungsstationen erforderlich sind, zwischen
denen die auf einem horizontalen Werkstückträger angeordneten Werkstücke taktweise bewegt werden müssen.
Der Werkstückträger weist außerdem vier Spannfutter
auf, die entsprechend der Bearbeitung ebenfalls schwenkbar
sind. Insgesamt sind vierzehn Bearbeitungsachsen vorhanden.
Die Investitionskosten sind relativ hoch.

Es sind außerdem sogenannte Mehrwege-Automaten mit horizontaler oder vertikaler Schaltachse vorbekannt. Bei
einem Mehrwege-Automaten dieser Gattung sind insgesamt
neunzehn Bearbeitungsachsen vorgesehen, achtzehn Werkzeuge
und sieben Spannbacken und achtzehn Hubverstellungen
mit sieben Stationen. Zwar sind die Spann- und Teilzeiten
sehr kurz, jedoch liegen die Investitionskosten in der
Größenordnung der Mehrstationen-Schalttischmaschinen.

0172299

- 3 -

Eine NC-Steuerung sämtlicher Achsen würde die Maschine praktisch unbezahlbar machen. Außerdem ist das Umrüsten eines solchen Mehrstationen-Automaten außerordentlich zeit- und kostenintensiv, da dabei z.B. sieben Spannfutter umgerüstet werden müssen. Auch müssen in gewissen Fällen die Pinolenhalter seitlich verstellt und neu eingerichtet werden, womit entsprechend große Rüstzeiten verbunden sind.

## A u f g a b e

Der Erfindung liegt die Aufgabe zugrunde, eine Werkzeugmaschine in Form eines Bearbeitungszentrums gemäß dem Gattungsbegriff des Patentanspruches 1 so auszugestalten, daß bei relativ geringem konstruktivem Aufwand, hoher Produktivität durch gleichzeitige Mehrseitenbearbeitung und geringem Raumbedarf eine hohe Bearbeitungsgenauigkeit bei geringen Rüstzeiten erzielt wird. Diese Werkzeugmaschine sollte außerdem zur Bearbeitung von Teilen aus mindestens drei Richtungen gleichzeitig eingesetzt werden, mit der Möglichkeit, fünf Seiten eines Werkstückes ohne Umspannung zu bearbeiten.

## L ö s u n g

Ausgehend von einer Werkzeugmaschine gemäß dem Gattungsbegriff wird diese Aufgabe durch die kennzeichnenden Merkmale des **Patentanspruches 1** gelöst.

- 4 -

## Einige Vorteile

Dadurch, daß bei einer erfindungsgemäßen Werkzeugmaschine drei Bearbeitungseinheiten vorgesehen sind, lassen sich Werkstücke, beispielsweise T-Stücke, ohne Schwenken von drei Seiten gleichzeitig bearbeiten.

Die anfallenden Späne können dabei ungehindert nach unten zum Späneförderer herunterfallen.

Ein weiterer Vorteil ist darin zu sehen, daß eine erfindungsgemäße Werkzeugmaschine eine relativ kleine Aufstellfläche erfordert. Vergleichbare Maschinen, z.B. drei Bearbeitungszentren oder eine Vierstationen-Schalttischmaschine brauchen erheblich mehr Aufstellfläche.

Ein besonderer Vorteil ist darin zu sehen, daß nur eine Spannvorrichtung für dreiseitige Bearbeitung notwendig ist. Dies bringt ein hohes Maß an Genauigkeit, insbesondere im Vergleich zu Maschinen mit Teiltischen oder Palettenschwenkvorrichtungen.

Des weiteren ermöglicht eine erfindungsgemäße Maschine

**0172299**

- 5 -

den Aufbau eines kompakten Teilautomaten mit schnellem Werkstückwechsel. Die Werkstücke können während der Bearbeitung gewechselt werden.

Dabei ist es ohne weiteres möglich, den einzelnen Bearbeitungseinheiten Normalwerkzeuge, z.B. zum Bohren und Fräsen sowie Gewindeschneiden und/oder auch Mehrspindelbohrkassetten oder Plandreheinheiten, zuzuordnen.

Im übrigen ist eine erfindungsgemäße Maschine flexibel im Umrüsten, wobei nur relativ wenig Zeit benötigt wird.

Auch ist eine gute Zugänglichkeit des Werkstückes z.B. in der Beladestation 43 und der Werkzeuge z.B. 28,29,30 gegeben.

Die erfindungsgemäße Werkzeugmaschine läßt sich auch mit Vorteil in verketteten Anlagen einsetzen.

Im Normalfalle wird man die Bearbeitungsachse (Z) NC-gesteuert ausführen. In diesem Fall können die beiden anderen Achsen (X,Y) als Stellachse beim Umrüsten verwendet werden (für bestimmte Teilefamilien). Es steht jedoch auch nichts im Wege, mehr als nur eine Achse, z.B. drei Achsen - X-, Y- und Z-Achsen - NC-gesteuert auszuführen.

- 6 -

Da das Werkstück stillsteht, während die Werkzeuge in
Bearbeitungsposition, und zwar von mindestens drei Seiten
gleichzeitig gebracht werden können, lassen sich sehr
große Genauigkeiten erzielen, da z.B. zum Bearbeiten
mehrerer Seiten das Werkstück nicht taktweise in verschiedene Positionen bewegt zu werden braucht, womit
immer gewisse Ungenauigkeiten verbunden sind.

Es ist jedoch auch möglich, eine vierte und fünfte Bearbeitungseinheit zusätzlich von oben bzw. von unten als
Pinoleneinheit vorzusehen.

Alles in allem ermöglicht die Erfindung eine Modulbauweise,
um die Bearbeitungseinheiten zusammenzubringen.

Jede Bearbeitungseinheit kann erforderlichenfalls zusätzlich
in der horizontalen Ebene um eine Achse schwenkbar und
in der jeweiligen Position auch arretierbar ausgeführt
sein. Dadurch lassen sich in weiteren Ebenen Arbeiten
durchführen.

Schließlich ist es möglich, das Spannfutter um dessen
horizontale Längsachse und/oder um eine vertikale Achse
schwenkbar auszubilden. Auf diese Weise läßt sich an

- 7 -

Des weiteren läßt sich eine Werkzeugmaschine gemäß der
Erfindung nicht nur zur spanabhebenden Bearbeitung,
sondern auch zum Umformen, z.B. zum Gewinderollen, zum
Erodieren o. dgl., einsetzen.

## Weitere Ausführungsformen

Bei einer bevorzugten Ausführungsform der Erfindung
ist jeder Bearbeitungseinheit eine Schlitteneinheit
zugeordnet, die die Bearbeitungseinheit in horizontaler
und/oder vertikaler Ebene führt. Dadurch ergibt sich
eine stabile, sehr genaue Führung jeder Bearbeitungseinheit,
die unabhängig voneinander und mit unterschiedlicher
Antriebsart, bewegbar sind.

Erfindungsgemäß ist auch eine Variante mit zwei Einheiten,
z.B. Einheit 1 und Einheit 2 denkbar. Durch eine Schwenkbewegung von 90 Grad kann die Einheit 2 in die Stelle
der Einheit 3 gebracht werden. Eine solche Variante
kann vorteilhafterweise bei Werkstücken mit sehr unterschiedlichen Bearbeitungszeiten pro Seite angewendet
werden.

Wird eine Ausführungsform gemäß **Patentanspruch 3** gewählt,

0172299

- 8 -

so läßt sich das Werkstück gegenüber den Bearbeitungseinheiten in weitere Bearbeitungspositionen bringen.
Durch diese Schwenkbewegung ist die Fünfseitenbearbeitung
ohne Umspannen möglich.

In **Patentanspruch 4** ist eine vorteilhafte Ausführungsform
der Erfindung beschrieben.

Eine besonders vorteilhafte Ausführungsform wird durch
**Patentanspruch 5** gekennzeichnet.

Gemäß **Patentanspruch 6** ist jeder Werkzeugträger der
Bearbeitungseinheit mit Ein- und/oder mit Mehrspindeleinheiten und/oder Plandrehköpfen ausgerüstet.

Wie in **Patentanspruch 7** beschrieben, ist der Werkzeugträger
jeder Bearbeitungseinheit als Revolver mit eingebauten
Spindeleinheiten ausgebildet.

- 9 -

Eine weitere, besonders vorteilhafte Ausführungsform ist in **Patentanspruch 8** beschrieben. Bei dieser Ausführungsform dient der Werkzeugträger gewissermaßen als Magazin. Immer nur das jeweils benötigte Werkzeug wird durch Drehen des revolverförmigen Werkzeugträgers (Schwenkbewegung C) in die Bearbeitungsebene gebracht und dann an den Antrieb angekuppelt. Das bedeutet, daß nur immer das sich in Arbeitsposition befindliche Werkzeug an dem Antrieb angekuppelt werden kann, während die anderen Werkzeuge antriebslos in dem revolverähnlichen Werkzeugträger angeordnet sind.

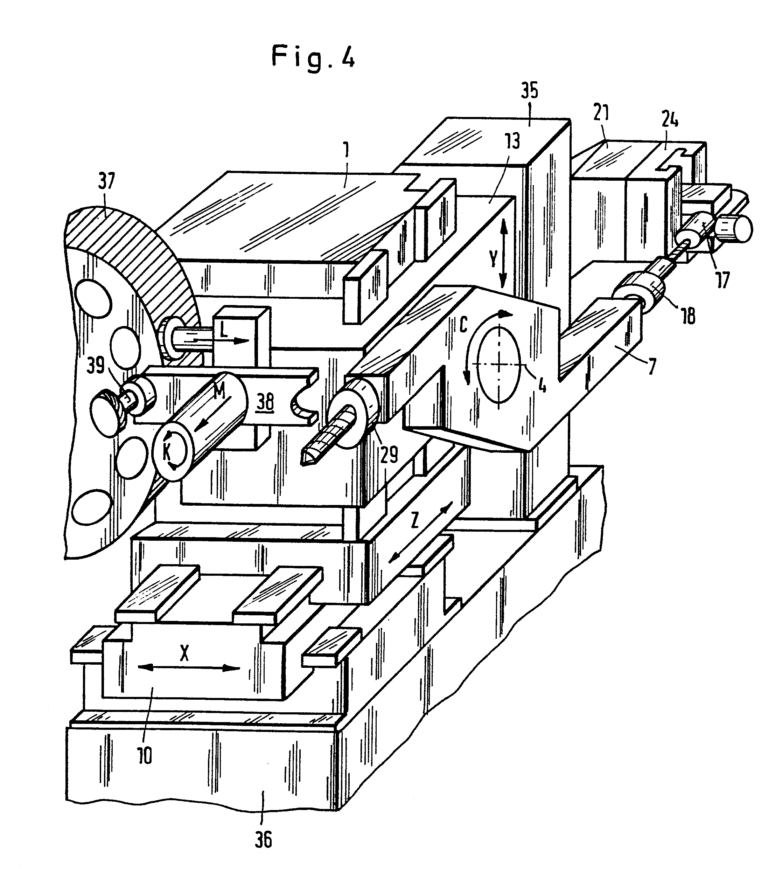

Eine besonders vorteilhafte Ausführungsform ergibt sich aus Patentanspruch 9 in Verbindung mit Patentanspruch 7, z.B. Modulausführung mit Revolverkopf und zwei Spindeleinheiten (Fig. 4). Hierdurch ergeben sich kurze Spannzeiten, weil der Werkzeugwechsel während der Bearbeitung erfolgen kann. Außerdem wird die Flexibilität durch ein Werkzeugmagazin mit großer Speicherkapazität erhöht. Es ist auch möglich, den Werkzeugwechsler mit einem Greiferarm und Werkzeugmagazin auf einer Schlitteneinheit zu befestigen. Durch den Greiferarm ergeben sich geringe dynamische Massenbeanspruchungen der Schlitteneinheit während des Wechsels. Es ist jedoch auch möglich, die Einheit ohne Greiferarm auszuführen und das Magazin als Wechsler auszugestalten. Dadurch ergeben sich geringere Kosten.

**0172299**

- 10 -

Wird eine Ausführungsform nach Anspruch 8 in Verbindung mit Anspruch 9 gewählt, so kann die Magazinspeicherkapazität erheblich erhöht und dadurch die Flexibilität wesentlich verbessert werden.

In der Zeichnung ist die Erfindung - teils schematisch - an mehreren Ausführungsbeispielen veranschaulicht. Es zeigen:

Fig. 1 eine Werkzeugmaschine gemäß der Erfindung in Ansicht des Pfeiles F der Fig. 2, wobei die in Blickrichtung vordere Bearbeitungseinheit weggelassen ist;

Fig. 2 eine Draufsicht zu Fig. 1 in der Ansichtsrichtung E;

Fig. 3 eine perspektivische Darstellung in Richtung des Pfeiles U in Figur 2;

Fig. 4 Bearbeitungseinheit 1 mit Revolver und Werkzeugwechsler mit Magazin.

Bei den dargestellten Ausführungsformen sind mit den Bezugszeichen 1,2 bzw. 3 insgesamt Bearbeitungseinheiten bezeichnet, die jeweils im wesentlichen aus einem um je eine horizontale Achse 4,5 bzw. 6 motorisch drehbaren, revolverförmigen Werkzeugträger 7,8 bzw. 9 und je einer Schlitteneinheit 10,11 bzw. 12 bestehen. Durch die jeweils zugeordnete Schlitteneinheit 10,11 bzw. 12 läßt sich jede Bearbeitungseinheit 1,2 bzw. 3 in Achsrichtung

- 11 -

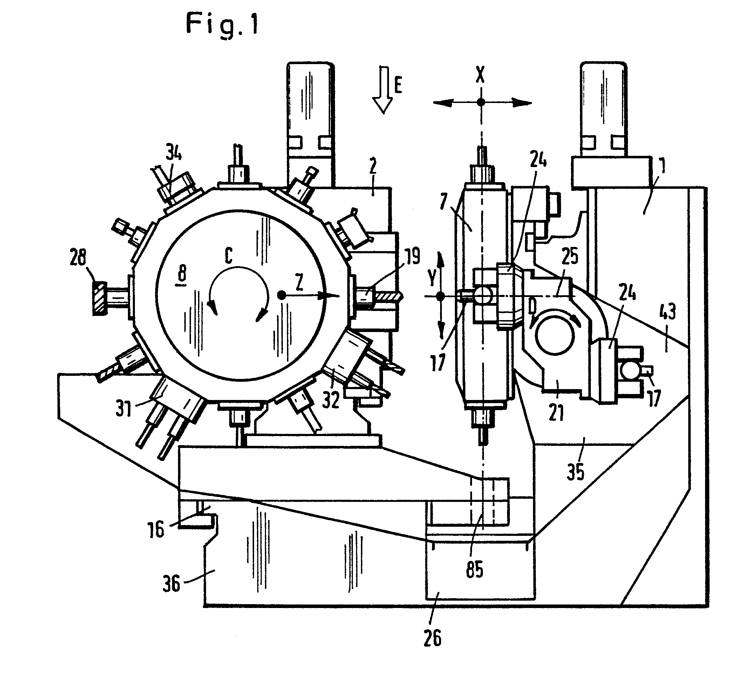

Z motorisch zustellen und entgegengesetzt auch wieder
wegbewegen. Senkrecht zu dieser Achsrichtung Z sind
die Bearbeitungseinheiten 1,2 und 3 über die Schlittenführungen 13,14 bzw. 15 ebenfalls in beiden Richtungen,
also in Achsrichtung Y (Fig. 1) motorisch verstellbar
und in der jeweils gewünschten Höhenstellung auch arretierbar. Die Verstellung kann aber im Bedarfsfalle für eine
oder mehrere Achsen auch von  Hand über je eine Kurbel
geschehen.

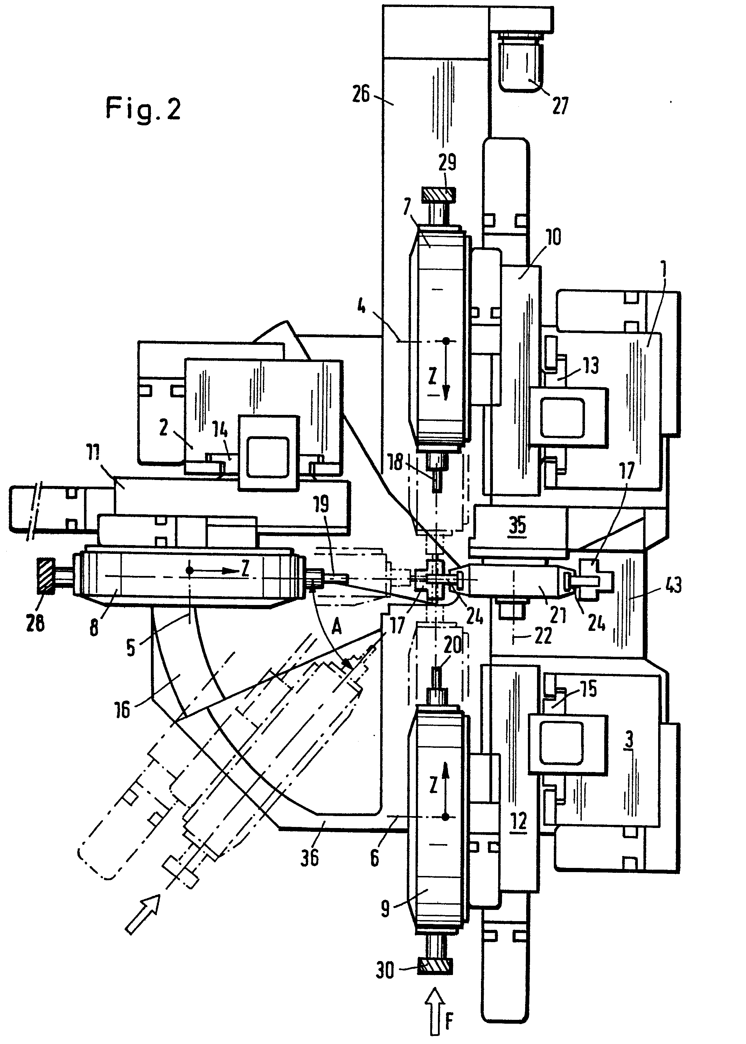

Schließlich sind die Bearbeitungseinheiten 1,2,3 auch
in Richtung der X-Achse (Fig. 1) in beiden Richtungen
motorisch mit unterschiedlicher Antriebsart oder von
Hand über je eine Kurbel verstellbar. Mindestens eine
Bearbeitungseinheit, z.B. die Bearbeitungseinheit 2,
ist auch in horizontaler Ebene an einer sektorenförmigen
Schlittenführung 16 an die Achse 85 verschwenkbar und
in der jeweils gewünschten Winkelstellung auch arretierbar. In Fig. 2 ist eine Schwenkstellung mit strichpunktierten Linien angedeutet, bei welcher die Bearbeitungseinheit
2 aus der mit durchgezogenen Linien dargestellten Mittelstellung um den Winkel A in Richtung auf die Bearbeitungseinheit 3 geschwenkt worden ist. Der Mittelpunkt des
Schwenkradius liegt in dem aus Fig. 2 ersichtlichen
Schnittpunkt der durch die Werkzeuge verlaufenden Z-Achsen
der Bearbeitungseinheiten 1,2, und 3. In diesem Bereich

- 12 -

ist auch das zu bearbeitende Werkstück 17 angeordnet,
das vorliegend als T-Stück ausgebildet ist und durch
die aus Fig. 2 ersichtlichen drei Werkzeuge 18,19 und
20 der Bearbeitungseinheiten 1,2 und 3 gleichzeitig
von drei verschiedenen Seiten bearbeitet, beispielsweise
gebohrt, wird.

Wie insbesondere aus Fig. 3 ersichtlich ist, wird das
Werkstück 17 in nur einem Werkstückträger 21 gehalten,
der um eine horizontale Achse 22 aus einer Beladestellung
in eine Bearbeitungsstellung, vorliegend um 180 Grad
schwenkbeweglich und in der jeweils gewünschten Lage
auch arretierbar angeordnet ist. Statt dessen kann auch
ein Werkstückträger nach Art eines Kippstuhles verwendet
werden, wobei mit nur einer Werkstückspannvorrichtung
ausgekommen wird. Bei einem als Kippstuhl ausgeführten
Werkstückträger wird der Kippstuhl um 90 Grad von seiner
Beladestellung in die Bearbeitungsstellung geschwenkt.
Hierzu kann eine abwechselnd beidseitig mit Druckmitteldruck
beaufschlagbarer Kolben-Zylinder-Einheit verwendet werden,
die den Kippstuhl entsprechend betätigt. Diese Lösung
ist besonders dafür geeignet, daß die Werkstückspannvorrichtung als Palette aufnehmbar ist.

Der Werkstückträger 21 weist gegebenenfalls eine austauschbare Spannvorrichtung oder Palette 24 auf, die je nach
der Art des zu bearbeitenden Werkstückes 17 bestimmt

- 13 -

wird. Die Schwenkbewegung des Werkstückträgers 21 ist in Fig. 1 mit D bezeichnet.

Außerdem kann der Werkstückträger 21 bzw. eine Spannvorrichtung 24 um eine senkrecht zur Schwenkachse 22 verlaufende Achse 25 (Fig.3) in beiden Drehrichtungen um
ein gewisses Winkelmaß oder auch unendlich drehbeweglich
und in der jeweils gewünschten Winkelstellung auch arretierbar ausgebildet sein. Diese Drehung B (Fig. 3) kann motorisch oder von Hand erfolgen.

Unterhalb der Bearbeitungseinheiten 1,2,3 ist ein Späneförderer 26 angeordnet, der über einen Motor 27 angetrieben wird.

Wie insbesondere die Fig. 1 und 3 erkennen lassen, tragen
die Werkzeugträger 7,8 und 9 über ihre Peripherie jeweils
verteilt die für die unterschiedlichsten Bearbeitungsvorgänge benötigten Werkzeuge, z.B. Bohrer - von denen
oben bereits die Bohrer 18, 19 und 20 mit Bezugszeichen
bezeichnet wurden -, aber auch Fräser, z.B. 28,29 und
30, Mehrspindeleinheiten, z.B. 31,32 und 33 und z.B.
Plandrehköpfe 34 wie sie z.B. aus Fig. (1,3) ersichtlich
sind. Selbstverständlich kommen auch im Bedarfsfalle
andere Werkzeuge zur Anwendung, falls dies im Hinblick
auf den jeweiligen Bearbeitungsvorgang notwendig oder
zweckmäßig sein sollte, z.B. Werkzeuge zum Gewindeschneiden,
zum Feindrehen, zum Einstechen.

- 14 -

Aus den Fig. 2 und 3 ist außerdem ein Träger 35 für den Werkstückträger 21 ersichtlich. Der Werkstückträger 21 kann an dem Träger 35 in vertikaler oder horizontaler Ebene verstellbar, z.B. motorisch oder von Hand über Kurbel verstellbar und in der jeweils gewünschten Höhenstellung auch arretierbar, angeordnet sein.

Bei der Ausführungsform nach Fig. 4 sind wiederum für Teile gleicher Funktion die gleichen Bezugszeichen verwendet worden. Hierbei ist der Revolver in Richtung C schwenkbar ausgestaltet. Bei der dargestellten Ausführungsform weist der Werkzeughalter lediglich zwei Werkzeuge auf. Während sich das eine in Bearbeitungsstellung, in der Zeichnungsebene vorn, befindet, befindet sich das andere in der Wechselposition. Es ist jedoch auch möglich, den Revolver mit mehr als nur zwei Werkzeugen, z.B. mit einer erheblich größeren Anzahl von Werkzeugen, auszugestalten.

Der Grundkörper ist mit 36, das Werkzeugmagazin mit 37, der Werkzeugwechsler mit Greiferarm mit 38 und die Werkzeuge im Magazin mit 39 bezeichnet, während 43 eine Beladestation darstellt.

Der Doppelpfeil K zeigt die Drehbewegung des Werkzeugwechslers, L die Linearbewegung des Werkzeugwechslers, M die Linearbewegung des Werkzeugwechslers und U die Ansichtsrichtung.

- 15 -

Werkzeugwechsler mit Greiferarm 38 und Werkzeugträger 37 können auf der Schlitteneinheit 13 befestigt werden. Der Vorteil des Greiferarms besteht darin, daß sich nur geringe dynamische Massenbeanspruchungen der Schlitteneinheit 13 während des Wechsels ergeben. Ohne Greiferarm kann ein Magazin als Wechsler dienen. Hierdurch ergeben sich geringere Kosten.

Bei der dargestellten Ausführungsform sind alle Bewegungen der Bearbeitungseinheiten 1,2,3 NC-gesteuert, so daß sich sehr große Genauigkeiten bei kurzen Bearbeitungs- und Einstellzeiten ergeben. Wird z.B. die Werkstückschwenkachse 25 gewählt, die auch entfallen kann, läßt sich beispielsweise ein Werkstück 17 ohne Schwierigkeiten von fünf oder mehreren Seiten bei nur einem Werkzeugträger 21 bearbeiten.

Deutlich erkennt man, daß die gesamte Maschine kompakt baut und daß die Späne ungehindert zwischen den Bearbeitungseinheiten 1,2 und 3 zum Späneförderer 26 nach unten hindurchfallen und weggefördert werden können (Fig. 3).

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## B e z u g s z e i c h e n l i s t e

```
 1  Bearbeitungseinheit

 2              "

 3              "

 4  horizontale Achse

 5         "        "

 6         "        "

 7  Werkzeugträger

 8         "

 9         "

10  Schlitteneinheit

11         "

12         "

13  Schlittenführung

14         "

15         "

16         "

17  Werkstück

18  Werkzeug

19      "

20      "

21  Werkstückträger
```

22   Achse

24   Werkstückspannvorrichtung

25   Achse

26   Späneförderer

27   Motor für Späneförderer

28   Fräser

29      "

30      "

31   Mehrspindeleinheit

32         "

33         "

34   Plandrehkopf

35   Träger

36   Grundkörper

37   Werkzeugmagazin

38   Werkzeugwechsler mit Greiferarm

39   Werkzeug im Magazin

43   Beladestation

85   Vertikale Achse

A    Schwenkwinkel

B    Schwenkbewegung Werkstückträger

C    Schwenkbewegung Werkzeugträger

D    Schwenkbewegung des Werkstückträgers 21

E    Ansichtsrichtung

F         "

K    Drehbewegung für Werkzeugwechsler

L    Linearbewegung für Werkzeugwechsler

M    Linearbewegung für Werkzeugwechsler

U    Ansichtsrichtung

X    Achse

Y        "

Z        "

---

**P a t e n t a n s p r ü c h e**

---

1. Werkzeugmaschine mit taktweise in Bearbeitungsstellung bringbaren Werkzeugen, mit Werkzeugträger, Werkstückträger und mehreren Bewegungsachsen, **dadurch gekennzeichnet**, daß

   a) das Werkstück (17) während der Bearbeitung ruht;

   b) mindestens zwei, in der Regel drei identische Bearbeitungseinheiten (Module) (1,2,3) mit Werkzeugträgern (7,8,9) mit je mindestens einer horizontalen Drehachse (4,5,6) vorhanden sind, die an ihrem Umfang oder in Spindeln die Bearbeitungswerkzeuge aufweisen;

   c) das Werkstück gleichzeitig von mindestens zwei, in der Regel von drei Seiten mit Werkzeugen (18,19,20) bearbeitbar ist;

   d) alle Bearbeitungseinheiten (1,2,3) jeweils drei senkrecht zueinander stehende Bewegungsachsen (X,Y,Z) aufweisen;

- 2 -

e) mindestens eine der Bearbeitungseinheiten (1,2,3)
   insgesamt um eine senkrecht zur Bearbeitungsachse
   (Z) verlaufende Achse (85), vorzugsweise in horizontaler Ebene, schwenkbar und in der jeweiligen
   Schwenkstellung arretierbar ist;

f) der allen drei Bearbeitungseinheiten (1,2,3)
   gemeinsame Werkstückträger (21) um eine horizontale Schwenkachse (22) von einer Beladestation
   (43) in die Bearbeitungsstellung schwenkbeweglich
   und/oder zusätzlich um eine weitere horizontale
   Achse (25) drehbeweglich und in der jeweils gewünschten Winkelstellung auch arretierbar und/oder
   um eine vertikale Achse (85) schwenkbeweglich
   ist.

2. Werkzeugmaschine nach Anspruch 1, **dadurch gekennzeichnet**, daß jeder Bearbeitungseinheit (1,2,3)
   mindestens eine Schlitteneinheit (10,11,12) zugeordnet
   ist.

3. Werkzeugmaschine nach Anspruch 1 oder 2, **dadurch
   gekennzeichnet**, daß die Werkstückspannvorrichtung
   (24) des einzigen Werkstückträgers (21) mit beliebiger
   Winkelstellung rotierbar und arretierbar ausgebildet
   ist.

- 3 -

4. Werkzeugmaschine nach Anspruch 1 oder einem der folgenden, **dadurch gekennzeichnet**, daß der Werkstückträger (21) zwischen der Beladestation (43) und der Bearbeitungsstellung um eine beliebige Winkelteilung, z.B. um 180 Grad, vorzugsweise um die horizontale Achse (22) schwenkbar ist (Fig. 1 und 2).

5. Werkzeugmaschine nach Anspruch 1 oder einem der folgenden, **dadurch gekennzeichnet**, daß alle Bearbeitungseinheiten (1,2,3) auf einem gemeinsamen Grundkörper (36) im Abstand von z.B. geneigten Wandungen angeordnet sind, die von den Bearbeitungseinheiten (1,2,3) frei nach unten fallenden Späne zu einem gemeinsamen Späneförderer (26) leiten.

6. Werkzeugmaschine nach Anspruch 1 oder einem der folgenden, **dadurch gekennzeichnet**, daß jeder Werkzeugträger (7,8,9) Ein- oder Mehrspindeleinheiten (31,32,33) und/oder Plandrehköpfe (34) aufnehmen kann.

7. Werkzeugmaschine nach Anspruch 1 oder einem der folgenden, **dadurch gekennzeichnet**, daß der Werkzeugträger

- 4 -

(7,8,9) als Revolver mit eingebauten Spindeleinheiten ausgebildet ist.


8. Werkzeugmaschine nach Anspruch 1 oder einem der Ansprüche 2 bis 6, **dadurch gekennzeichnet**, daß der Werkzeugträger (7,8,9) als Magazin ausgebildet ist und daß nur das in Bearbeitungsposition befindliche Werkzeug in eine Spindelantriebseinheit mit geeigneter Werkzeugaufnahme aufnehmbar ist.


9. Werkzeugmaschine nach Anspruch 1 oder einem der Ansprüche 2 bis 8, **dadurch gekennzeichnet**, daß jeder Bearbeitungseinheit ein zusätzlicher Werkzeugwechsler zum Wechseln der Werkzeuge (z.B. Fig. 4) zugeordnet ist.

Fig.1

0172299

Fig.2

0172299

## Fig. 3

0172299

Fig.4

# EUROPÄISCHER RECHERCHENBERICHT

**0172299**
Nummer der Anmeldung

## EINSCHLÄGIGE DOKUMENTE

EP 85100917.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | EP - A1 - 0 032 890 (MULLER & PE-SANT)<br><br>* Zusammenfassung; Fig. 2 *<br><br>-- | 1,2,5,6 | B 23 Q 39/04 |
| A | DE - A - 1 477 776 (STANDARD)<br><br>* Seite 7, 1. Absatz, Fig. 3 *<br><br>-- | 1 | |
| A | DE - A1 - 2 901 005 (PEDDINGHAUS)<br><br>---- | | |

**RECHERCHIERTE SACHGEBIETE (Int. Cl 4)**

B 23 B 39/00

B 23 Q 3/00

B 23 Q 39/00

Der vorliegende Recherchenbericht wurde für alle Patentansprüche erstellt.

| Recherchenort | Abschlußdatum der Recherche | Prufer |
|---|---|---|
| WIEN | 05-11-1985 | LEBZELTERN |